# EUROPÄISCHE PATENTANMELDUNG

(11) **EP 2 365 685 A1**
(43) Veröffentlichungstag der Anmeldung: **14.09.2011**
(21) Anmeldenummer: 10155315.4
(22) Anmeldetag: 03.03.2010
(51) Int. Cl.: H04M 3/30, H04M 11/06

(54) **Verfahren und System zur Messung von DSL-Übertragungsparametern**

(71) Anmelder: Deutsche Telekom AG, 53115 Bonn (DE)
(72) Erfinder: Küller, Jürgen, 53757, St. Augustin (DE)

(57) **Zusammenfassung**

Die Anmeldung betrifft ein Verfahren und ein System zur Messung von Übertragungsparametern einer DSL-Strecke, wobei die DSL-Strecke zwischen einer Vermittlungsstelle, insbesondere einem DSLAM, und einem Teilnehmer-Anschluss eingerichtet ist. Die Daten zur Messung der Übertragungsparameter werden zwischen einer der Vermittlungsstelle zugeordneten ersten Messeinrichtung und dem Teilnehmer-Anschluss ausgetauscht.

## Beschreibung

Die Anmeldung betrifft ein Verfahren und ein System zur Messung von Übertragungsparametern einer DSL-Strecke, wobei die DSL-Strecke zwischen einer Vermittlungsstelle, insbesondere einem DSLAM, und einem Teilnehmer-Anschluss eingerichtet ist. Die Daten zur Messung der Übertragungsparameter werden zwischen einer der Vermittlungsstelle zugeordneten ersten Messeinrichtung und dem Teilnehmer-Anschluss ausgetauscht.

Die tatsächlich beim Nutzer erreichbare DSL-Geschwindigkeit hängt von vielen individuellen Faktoren ab. Beeinflussende Faktoren sind beispielsweise die Leitungslänge bis zur Vermittlungsstelle, die Störung durch andere Leitungen, die Leitungsführung im Haus bis zum Übergabepunkt an den Nutzer und die verwendeten Komponenten der Übertragungstechnik. Sowohl der Nutzer des Anschlusses wie auch der Netzbetreiber haben naturgemäß ein grundsätzliches Interesse, die tatsächlich am Teilnehmer nutzbare Geschwindigkeit zu kennen. Die Geschwindigkeit eines DSL-Anschlusses und dessen Qualität ist vom Netzbetreiber aber ohne Messung nicht exakt feststellbar, sie kann durch die vielen Einflüsse erheblich unter aber auch über dem erwarteten Wert liegen.

Die Übertragungsparameter von DSL-Anschlüssen können auf verschiedene Art und Weise gemessen werden. Grundsätzlich ist es zunächst einmal möglich, bei dem Inhaber des Netzanschlusses ein Messgerät zu installieren, das die Übertragungsparameter permanent ermittelt. Durch eine solche Messung der Übertragungsparameter ließe sich die tatsächliche DSL-Geschwindigkeit und -Qualität zwar genau bestimmen, ein großflächiger Einsatz solcher Messgeräte, sowie insbesondere eine Verknüpfung der Messergebnisse mit personenbezogenen Daten des Nutzers, ist aus Kosten-und Akzeptanzgründen aber nicht durchführbar.

Für eine gelegentliche Überprüfung der DSL-Geschwindigkeit durch den Teilnehmer eignen sich Webseiten, die dem Nutzer eines DSL-Anschlusses eine Geschwindigkeits-Prüfung seines DSL-Anschlusses anbieten. Diese Webseiten ermitteln verschiedene Übertragungsparameter der bestehenden Datenverbindung, wobei für den Nutzer vor allem die Downlink- und Uplink-Geschwindigkeit seines DSL-Anschlusses von Interesse ist. Um diese Geschwindigkeiten zu ermitteln, werden zwischen dem Internet-Browser des Nutzers und der Internet-Präsenz der Webseite Datenpakete verschiedener Größen ausgetauscht. Im Ergebnis wird eine gemittelte Uplink- und Downlink-Geschwindigkeit des DSL-Anschlusses auf der Webseite dargestellt.

Diese Geschwindigkeitsangaben sind jedoch nicht belastbar. Einerseits ist das Messergebnis nutzerseitig von vielen Faktoren abhängig. Der nutzerseitige Datenfluss wird auf Seiten der Hardware beispielsweise durch die Verarbeitungsgeschwindigkeit des Computers, die Netzwerkkarte sowie die Art der Datenverbindung der Netzwerkkarte zum DSL-Router bzw. -Modem und dessen Eigenschaften beeinflusst. Software-seitig beeinflussen das Ergebnis unter anderem der eingesetzte Browser sowie das verwendete Netzwerkprotokoll.

Andererseits verläuft die Strecke der vermessenen netzseitigen Verbindung bis zur Internet-Präsenz der Webseite, also über die Vermittlungsstelle des Netzanbieters hinaus. Die gemessene Geschwindigkeit wird zwangsläufig auch von der jeweiligen Verfügbarkeit der Webseite im Internet beeinflusst und ist nicht auf die DSL-Strecke begrenzt.

Dem Messergebnis liegen somit eine Vielzahl von Faktoren zu Grunde, so dass eine gesicherte Angabe der Übertragungsparameter der DSL-Strecke durch diese Messung nicht möglich ist.

Belastbare Übertragungsparameter werden in der Regel nur dann ermittelt, wenn der Nutzer des DSL-Anschlusses wegen eines Problems auf den DSL-Netzbetreiber zugeht. Die für die Erzeugung valider Daten erforderliche Messung setzt eine standardisierte Messung am Teilnehmer-Anschluss voraus. Diese hierfür erforderliche Messvorrichtung wird von Technikern des Netzanbieters mitgeführt und für die Messung mit dem Netzabschluss des Teilnehmers verbunden. Die durch die Messung ermittelten Übertragungsparameter geben dem Netzanbieter eine sichere Information über die Parameter der DSL-Verbindung. Die Messung ist jedoch kostenträchtig, da sie jedes Mal von einem Techniker des Netzanbieters bei dem Teilnehmer vor Ort durchgeführt werden muss. Zudem stellt sie nur eine Momentaufnahme dar, die außer der Kontrolle des DSL-Anschlusses keinen Mehrwert bieten kann.

Aufgabe der vorliegenden Anmeldung ist es nun, ein Verfahren und ein System zur Messung von DSL-Übertragungsparametern vorzuschlagen, das es auf einfache Weise ermöglicht, Übertragungsparameter einer DSL-Strecke belastbar zu ermitteln. Zudem schlägt die Anmeldung verschiedene Verwendungsmöglichkeiten für die derart ermittelten Übertragungsparameter vor.

Die Aufgabe wird gelöst durch ein Verfahren gemäß Anspruch 1 und ein System gemäß Anspruch 8.

Ein wesentlicher Grundgedanke ist dabei, ein standardisiertes Messverfahren zur Ermittlung von DSL-Übertragungsparametern mit einer am DSL-Anschluss des Teilnehmers stets erforderlichen Netzkomponente, dem DSL-Modem, durchzuführen. Solche DSL-Modems werden dem Teilnehmer bei Vertragsabschluss regelmäßig von Netzanbieter gestellt, meistens integriert in einen DSL-Router. Dem Netzanbieter sind die Eigenschaften der zur Verfügung gestellten DSL-Modems bauartbedingt bekannt. Zusätzlich kann er jedem seiner Teilnehmer ein bestimmtes DSL-Modem zuordnen. Dies ermöglicht es dem Netzbetreiber, das DSL-Modem am DSL-Anschluss eines Teilnehmers als anschlussbezogene Messeinrichtung mit bekannten Eigenschaften zu verwenden.

Das DSL-Modem ist in unmittelbarer Nähe zum Netzabschluss angeordnet, also in der Übertragungskette am Übergabepunkt zwischen Netzanbieter und Teilnehmer gelegen. Die zwischen DSL-Modem und Vermittlungsstelle ausgetauschten Daten zur Messung der Übertragungsparameter werden nicht über andere Netzkomponenten des Teilnehmers geleitet, da diese in der Übertragungskette nachgeschaltet sind. Die nutzerseitig weiter vorhandenen Netzkomponenten oder Anwendungsprogramme haben auf das Messergebnis somit keinen Einfluss.

Zudem besteht keine Gefahr, dass der Teilnehmer die über das Modem erfolgte Messung bewusst oder unbewusst beeinflusst und hierdurch das Messergebnis verfälscht. Technisch betrachtet ist ein Modem ein Applikations-Computer für eine festgelegte Aufgabe. Auf ihm läuft eine Anwendungssoftware, die sich durch den Netzbetreiber installieren bzw. updaten lässt, ohne dass der Teilnehmer selbst darauf Zugriff hat. Dem Teilnehmer ist es nur schwer oder gar nicht möglich, auf die Messung Einfluss zu nehmen, wodurch das Messverfahren manipulationssicher erfolgen kann.

Das DSL-Modem ist also eine Netzkomponente, die alle Ansprüche an ein standardisiertes Messverfahren erfüllt. Um belastbare Messergebnisse zu bekommen, ist es für den Netzbetreiber nun nicht mehr erforderlich, von einem Techniker eigens ein mitgeführtes Messgerät an den Netzanschluss anschließen zu lassen. Diese Aufgabe übernimmt das DSL-Modem.

Bei allen wesentlichen Messungen der Übertragungsparameter handelt es sich um Messungen auf der digitalen Ebene, die softwaremäßig ausführbar sind und vom DSL-Modem ausgeführt werden können. Es überträgt für die Messung definierte Datenpakete an eine der Vermittlungsstelle des Netzbetreibers zugeordnete erste Messeinrichtung. In umgekehrter Richtung empfängt es von der ersten Messeinrichtung gesendete definierte Datenpakete. Zusätzlich können spezielle Mess-Signale zwischen den beiden Messeinrichtungen übertragen werden. Die vom DSL-Modem gemessenen Werte werden dann an die erste Messeinrichtung übertragen. Aus diesem Austausch definierter Daten kann die erste Messeinrichtung die wichtigen Übertragungsparameter der DSL-Strecke einschließlich Geschwindigkeit und Qualität ermitteln.

Das erfindungsgemäße System umfasst die erste, der Vermittlungsstelle des Netzanbieters zugeordnete Messeinrichtung, insbesondere einen Mess-Server des Netzbetreibers, und eine zweite Messeinrichtung in Form des DSL-Modems des Teilnehmers. Werden nun zwischen der ersten und der zweiten Messeinrichtung Daten zur Messung der Übertragungsparameter ausgetauscht, sind die gewonnenen Messergebnisse belastbar.

Gemessen werden nur die Übertragungsparameter der DSL-Strecke, da beide Messeinrichtungen jeweils an einem ihrer Enden angeordnet sind. Naturgemäß sind dem Netzbetreiber die Eigenschaften seiner der Vermittlungsstelle zugeordneten ersten Messeinrichtung bekannt. Erfindungsgemäß kennt er nun die Eigenschaften der am Netzabschluss angeordneten zweiten Messeinrichtung. Der Messung liegen also zwei Messeinrichtungen mit bekannten Eigenschaften zugrunde. Die mit dem erfindungsgemäßen System bestimmten Unbekannten sind valide Übertragungsparameter der DSL-Strecke.

In einer Ausführungsform ist die erste Messeinrichtung entfernt von der Vermittlungsstelle angeordnet. Auch in diesem Fall liefert die Messung belastbare Ergebnisse, da die Übertragungsparameter der zwischen der erster Messeinrichtung und der Vermittlungsstelle bestehenden Datenverbindung dem Netzbetreiber bekannt sind und aus den Messergebnissen herausgerechnet werden können.

In einer bevorzugten Ausführungsform werden die Messdaten regelmäßig zwischen dem DSL-Modem und der ersten Messeinrichtung ausgetauscht. Hierzu wird auf dem DSL-Modem vom Netzbetreiber eine zusätzliche Funktion installiert. Diese software-basierte Funktion übernimmt die Aufgabe, die für die Messung erforderlichen definierten Datenpakete regelmäßig zu übertragen und zu empfangen. Vorzugsweise wird die Funktion mit der automatisierten Suche des Modems nach Software-Updates verbunden. Diese Update-Suche findet in der Regel einmal täglich sowie beim Einschalten des DSL-Modems statt.

Die regelmäßige, insbesondere tägliche Messung der Übertragungsparameter eignet sich im besonderen Maße zum Erstellen eines Profils des DSL-Anschlusses. Durch einen Abgleich der aktuell gemessenen Ergebnisse mit dem Profil können schleichende oder plötzliche Änderungen der Übertragungsparameter einfach festgestellt werden.

In einer besonders bevorzugten Ausführungsform wird die Messung zu einer Zeit ohne anderweitige Datenübertragung ausgeführt, so dass der Austausch der Messdaten nicht die für den Teilnehmer nutzbare Bandbreite des DSL-Anschlusses begrenzt.

Vorzugsweise wird ein Computerprogramm zur Messung der Übertragungsparameter online auf das DSL-Modem übertragen. Hierzu weist das DSL-Modem eine Schnittstelle zu einer beim Netzbetreiber vorgehaltenen Update-Funktion auf. Der Netzbetreiber ist somit nicht mehr darauf angewiesen, dem Nutzer zur Durchführung von standardisierten Messungen ein neues Modem zu übersenden. Er kann die erforderliche Software online auf ein beim Teilnehmer bereits vorhandenes Modem aufspielen. In einer besonders bevorzugten Ausführungsform wird diese Übermittlung in die Update-Funktion des Modems integriert, so der Nutzer nicht selber tätig werden muss.

In einer weiteren bevorzugten Ausführungsform weist die erste Messeinrichtung eine Schnittstelle zu einer Netzqualitätsüberwachung und/oder einer Tarifierungs-Einrichtung des Netzbetreibers auf.

Werden die Messdaten an eine Netzqualitätsüberwachung des Netzbetreibers übermittelt, stehen dem Qualitätssicherungs-System des Netzbetreibers regelmäßig belastbare Daten zum Zustand des Netzes zur Verfügung. Diese Daten können als Grundlage für eine automatisierte Netzbeeinträchtigungs-Früherkennung dienen. Durch gebündelte Betrachtung lassen sich punktuelle wie weiträumige Verschlechterungen des Netzes aufspüren und beheben. Darüber hinaus lassen sich bestehende Modelle zur Vorhersage der Leitungsparameter optimieren.

Derzeit werden Veränderungen der Übertragungsparameter nur erkannt, wenn sie zu Störungen beim Nutzer führen und er diese Störung meldet. Solche Störungen können beispielweise durch Schaltungsarbeiten im Netz, Austausch von Netzkomponenten oder Alterung ausgelöst werden. Die Kenntnis von plötzlichen oder auch schleichenden Veränderungen der Übertragungsparameter ist hilfreich für die langfristige Sicherstellung der Betriebssicherheit und die Zufriedenheit des Nutzers. Sie vermittelt darüber hinaus Erkenntnisse für die Erstellung verbesserter Netzmodelle.

Werden die Messdaten dem Tarifierungs-System des Netzbetreibers übermittelt, verfügt dessen Tarifierungs-Server über belastbare Informationen zur real verfügbaren DSL-Geschwindigkeit an einem bestimmten DSL-Anschluss. Diese Informationen lassen sich zur Grundlage einer geschwindigkeitsabhängigen Tarifierung machen.

Derzeit wird nicht die tatsächlich beim Nutzer erreichbare DSL-Geschwindigkeit tarifiert, sondern die im Netzknoten bereitgestellte Geschwindigkeit. Beworben wird diese Geschwindigkeit in Mbit/s in der Form "mit bis zu". Abhängig vom Leitungsnetz zum Nutzer liegt die dort ankommende Geschwindigkeit zum Teil erheblich darunter. Diese Diskrepanz gehört in Zufriedenheitsbefragungen der Nutzer zu den wichtigsten Kritikpunkten. Garantieren kann ein Netzbetreiber aber nur eine Geschwindigkeit, die das Leitungsnetz unter worst-case-Annahmen sicher erreicht und damit das tatsächliche Potenzial nicht ausschöpft.

Mit einer automatischen geschwindigkeitsabhängigen Tarifierung erreicht der Netzbetreiber ein Alleinstellungsmerkmal, da der Nutzer nur noch die Leistung bezahlen muss, die er wirklich erhält. Die beispielsweise täglich ermittelten Übertragungsparameter können dem Kunden als Nachweis, insbesondere online, zugänglich gemacht werden. Die Daten werden vorzugsweise auf der Konfigurations-Seite des Modems dargeboten.

Mit Hilfe der Messdaten ist es dem Netzbetreiber zudem möglich, seinen Kunden ein individuelles Upgrade auf eine tatsächlich verfügbare Übertragungsgeschwindigkeit anzubieten. Hierzu werden gemessene Übertragungsparameter automatisch mit den tarifierten Übertragungsparametern abgeglichen.

Vorzugsweise werden die gemessenen Übertragungsparameter dazu genutzt, dem Kunden ein Optimierungspotential für seinen mit dem Teilnehmeranschluss verbundenen Komponenten aufzuzeigen. Wird vom Teilnehmer ein herkömmlicher, im Internet auf vielen Webseiten angebotener DSL-Geschwindigkeitstest durchgeführt, ist das gemessene Ergebnis nicht nur von der DSL-Strecke, sondern auch von dem Geschwindigkeitspotential des Teilnehmer-Computers und seiner Verbindung mit dem Teilnehmeranschluss abhängig. Werden die Messergebnisse verknüpft, weisen unterschiedlichen Messwerten auf Optimierungsbedarf bei den vom Teilnehmer genutzten Komponenten hin.

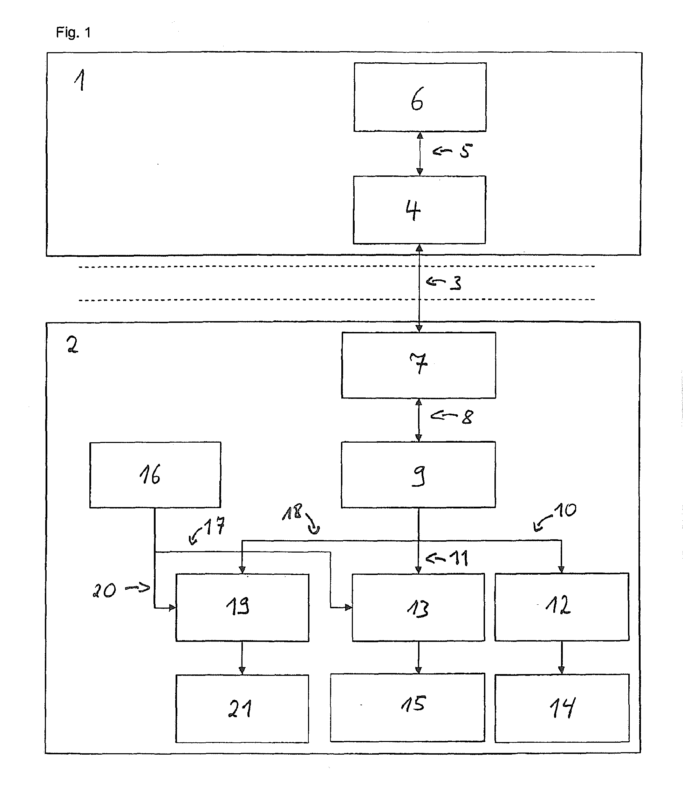

Eine Ausführungsform der Erfindung wird folgend anhand der Zeichnung beispielhaft beschrieben.

Die Figur ist unterteilt in einen Nutzer-Bereich1 und eine Netzbetreiber-Bereich 2. Zwischen beiden Bereichen verläuft das Anschlussnetz 3 in Form der DSL-Strecke.

Nutzerseitig endet die DSL-Strecke mit dem Netzabschluss, an dem ein DSL-Router 4 mit Modem-Funktion angeschlossen ist. Der Router 4 moduliert bzw. demoduliert die über die DSL-Strecke gesendeten bzw. empfangenen Daten. Er ist über ein LAN oder WLAN 5 mit einem Nutzer-PC 6 verbunden und leitet die entlang der DSL-Strecke 3 gesendeten und empfangenen Daten weiter.

Netzseitig endet die DSL-Strecke 3 in der Vermittlungsstelle 7. Sie enthält die für die Vermittlung und Übertragung der Daten erforderliche Netztechnik. Die Vermittlungsstelle 7, insbesondere in Form eines DSLAM, stellt einen Knoten im Netz dar, an dem die Anschlussleitungen verschiedener Teilnehmer zusammenlaufen. Die Vermittlungsstelle 7 weist eine Schnittstelle 8 zu einer von einem Mess-Server 9 gebildeten ersten Messeinrichtung auf. Die erfindungsgemäße Messung der gewünschten Übertragungsparameter erfolgt zwischen dem Mess-Server 9 und dem DSL-Router 4.

Der Mess-Server 9 weist weiter Schnittstellen 10, 11 auf, über die er mit einer Netzqualitätsüberwachung 12 und einem Tarifierungs-Server 13 in Verbindung steht.

Die vom Mess-Server 9 über die Schnittstelle 10 an die Netzqualitätsüberwachung 12 übermittelten Daten werden für den Netzservice 14 genutzt und beispielsweise zur automatisierte Netzbeeinträchtigungs-Früherkennung oder zur Verbesserung von Netz-Modellen verwendet.

Über die Schnittstelle 11 übermittelt der Mess-Server 9 Messdaten an den Tarifierungs-Server 13. Von diesem werden die zur Verfügung gestellten Daten zur beschriebenen real-geschwindigkeitsabhängigen Tarifierung 15 genutzt. Hierzu werden die Messdaten mit den auf einem Server 16 vorgehaltenen Kundendaten abgeglichen, der über eine weitere Schnittstelle 17 ebenfalls mit dem Tarifierungs-Server 13 verbunden ist.

In der gezeigten besonders bevorzugten Ausführungsform weist der Mess-Server 9 noch eine zusätzliche Schnittstelle 18 zu einem insbesondere automatisierten Marketing 19 des Netzbetreibers auf. Dem Marketingbereich des Netzbetreibers werden über die Schnittstelle 18 gesicherte Informationen zur höchstmöglichen DSL-Übertragungsgeschwindigkeit an einem bestimmten DSL-Anschluss übermittelt. Eine weitere Schnittstelle 20 zu dem Server 16 mit den Kundendaten erlaubt es dem Marketing 19, die Kundendaten mit den Messwerten zu verknüpfen. Auf dieser Grundlage kann der Netzbetreiber dem Nutzer personalisierte und genau auf seinen DSL-Anschluss zugeschnittene Angebote mit höherer DSL-Geschwindigkeit machen, die er anhand der konkreten Messwerte sogar garantieren kann.

Die DSL-Werbung versprach bisher entweder zu viel oder schöpft das tatsächliche Potenzial der spezifischen DSL-Strecke zu einem bestimmten Netzabschluss nicht aus. Mangels Kenntnis des tatsächlichen Potenzials konnte die Werbung auch nicht den einzelnen Nutzer ansprechen, sondern nur eine Kundengruppe in einem Areal mit vergleichbaren Übertragungsparametern, die anhand von Schätzungen auf der Grundlage der bekannten Leitungsführung ermittelt wurden.

Die Verfügbarkeit belastbarer Übertragungsparameter, die einem bestimmten DSL-Anschluss zugeordnet werden können, ermöglicht dem Netzbetreiber somit ein weiteres Alleinstellungsmerkmal, das personalisierte anschlussbezogene Marketing 21. Vorzugsweise kann der Kunde mittels Online-Zugriff auf die Messwerte sogar den Erfolg einer gebuchten Bandbreitenerhöhung unmittelbar nachvollziehen.

## Patentansprüche

1. Verfahren zur Messung von Übertragungsparameter einer DSL-Strecke (3), wobei die DSL-Strecke (3) zwischen einer Vermittlungsstelle (7) eines Netzbetreibers, insbesondere einem DSLAM, und einem Teilnehmer-Anschluss eingerichtet ist, wobei Daten zur Messung der Übertragungsparameter zwischen einer der Vermittlungsstelle (7) zugeordneten ersten Messeinrichtung (9) und dem Teilnehmer-Anschluss ausgetauscht werden, **dadurch gekennzeichnet, dass** die Daten zur Messung der Übertragungsparameter von einem DSL-Modem (4) des Teilnehmers empfangen und gesendet werden.

2. Verfahren nach Anspruch 1, **dadurch gekennzeichnet, dass** die Messdaten regelmäßig, insbesondere täglich, zwischen dem DSL-Modem (4) und der ersten Messeinrichtung (9) ausgetauscht werden.

3. Verfahren nach Anspruch 1, **dadurch gekennzeichnet, dass** ein die Messung der Übertragungsparameter ausführendes Computerprogramm online auf das DSL-Modem (4) übertragen wird.

4. Verfahren nach einem der Ansprüche 1 bis 3, **dadurch gekennzeichnet, dass** die gemessenen Übertragungsparameter über eine Schnittstelle online an den Teilnehmer-Anschluss übermittelt werden.

5. Verwendung der nach einem Verfahren der vorangegangenen Ansprüche gemessenen Übertragungsparameter zur Tarifierung des Teilnehmer-Anschlusses.

6. Verwendung der nach einem Verfahren der Ansprüche 1 bis 4 gemessenen Übertragungsparameter zum Messen von Netzbeeinträchtigungen.

7. Verwendung der nach einem Verfahren der Ansprüche 1 bis 4 gemessenen Übertragungsparameter zur Messung des Unterschieds zwischen einer gemessenen DSL-Übertragungsgeschwindigkeit und einer tarifierten DSL-Übertragungsgeschwindigkeit.

8. System zur Messung von Übertragungsparametern einer DSL-Strecke (3), insbesondere zur Durchführung eines Verfahrens nach einem der Ansprüche 1-4, wobei die DSL-Strecke (3) zwischen einer Vermittlungsstelle (7), insbesondere einen DSLAM, und einem Teilnehmer-Anschluss eingerichtet ist, umfassend eine der Vermittlungsstelle (7) zugeordnete erste Messeinrichtung (9) und eine an dem Teilnehmer-Anschluss angeordnet zweite Messeinrichtung, wobei zwischen der ersten (9) und der zweiten Messeinrichtung Daten zur Messung der Übertragungsparameter austauschbar sind, **dadurch gekennzeichnet, dass** die zweite Messeinrichtung in ein DSL-Modem (4) des Teilnehmers integriert ist.

9. System nach Anspruch 8, **dadurch gekennzeichnet, dass** die erste Messeinrichtung (9) eine Schnittstelle (10) zu einer Netzqualitätsüberwachung (12) und/oder eine Schnittstelle (11) einer Tarifierungseinrichtung (13) des Netzbetreibers umfasst.

10. System nach Anspruch 8 oder 9, **dadurch gekennzeichnet, dass** das DSL-Modem (4) eine Schnittstelle zu einer im Netz vorgehaltenen Update-Funktion umfasst.
